## Europäisches Patentamt
## European Patent Office
## Office européen des brevets

(19)

(11) Numéro de publication: **0 161 989**
**B1**

(12) # FASCICULE DE BREVET EUROPÉEN

(45) Date de publication du fascicule du brevet:
**10.08.88**

(51) Int. Cl.⁴: **A 23 B 7/16**

(21) Numéro de dépôt: **85400882.8**

(22) Date de dépôt: **06.05.85**

(54) **Compositions destinées au traitement des fruits et des légumes par thermonébulisation et procédé de traitement utilisant cette composition.**

(30) Priorité: **09.05.84 FR 8407148**

(43) Date de publication de la demande:
**21.11.85 Bulletin 85/47**

(45) Mention de la délivrance du brevet:
**10.08.88 Bulletin 88/32**

(84) Etats contractants désignés:
**BE CH DE FR GB IT LI LU NL**

(56) Documents cité:
**FR-A-870 894**
**FR-A-1 346 820**
**FR-A-1 512 203**
**FR-A-2 175 518**
**FR-E-89 250**
**GB-A-1 520 980**
**US-A-2 703 288**
**US-A-3 034 904**
**US-A-3 526 518**
**US-A-3 526 519**
**US-A-4 226 179**

**CHEMICAL ABSTRACTS, vol. 98, no. 3, janvier 1983, page 427, no. 15673u, Columbus, Ohio, US; J.P. SINGH et al.: "Controlling post-harvest decay of muskmelon fruits by coating wax-emulsion and fungicides"**

(73) Titulaire: **XEDA INTERNATIONAL, 58 rue Pottier, F-78150 Le Chesnay (FR)**

(72) Inventeur: **Sardo, Alberto, 9 Square de Tocqueville, F-78150 Le Chesnay (FR)**

(74) Mandataire: **Moncheny, Michel, c/o Cabinet Lavoix 2 Place d'Estienne d'Orves, F-75441 Paris Cedex 09 (FR)**

(56) Documents cité: (suite)
**Le dossier contient des informations techniques présentées postérieurement au dépôt de la demande et ne figurant pas dans le présent fascicule.**

## Description

La présente invention concerne des compositions destinées au traitement des fruits et des légumes par thermonébulisation, notamment dans des enceintes fermées, telles que des chambres de stockage ou des serres.

Le traitement des fruits et légumes après récolte peut être destiné à assurer seulement une protection pendans la période allant du conditionnement à la vente ou à assurer également la conservation des fruits et légumes dans le cas de fruits et légumes destinés à être entreposés avant la vente.

Dans ce deuxième cas, qui est le cas le plus général pour les pommes et les poires, les pommes de terre et quelques autres variétés de fruits et légumes, un traitement est généralement effectué sur les produits en caisse.

A cet effet, les caisses sont immergées dans ou aspergées avec une solution aqueuse contenant les différents produits chimiques de traitement.

Pour le traitement par des insecticides, à l'air libre, il existe des appareils de thermonébulisation qui mettent sous forme d'un fin brouillard une composition insecticide liquide par injection de cette composition dans un gaz chaud à grande vitesse.

On pouvait penser utiliser de tels appareils pour appliquer dans des enceintes fermées des produits de traitement à des fruits et légumes. On se heurte toutefois à des difficultés lorsque l'on veut en pratique utiliser cette technique, car les fruits à l'intérieur des caisses stockées sont difficiles à atteindre et à enrober de manière homogène. Or, il est essentiel que l'enrobage soit homogène pour que la protection soit correcte et que les limites de résidus de substances actives admissibles ne soient pas dépassées. En outre, les substances utilisées pour traiter les fruits et légumes sont généralement des substances organiques lipophiles pratiquement insolubles dans l'eau, souvent à l'état solide à la température ambiante. Or, l'utilisation de solutions dans des solvants organiques pour substances lipophiles est peu appropriée en raison des dangers de phytotoxicité, même en cas de ventilation soignée des locaux dans lesquels est effectuée la nébulisation. Par ailleurs, l'utilisation de dispersion de poudres mouillables classiques ne donne bas un enrobage homogène en raison de la taille des particules de ces poudres (1 > micron).

Comme technique antérieure, on peut bar ailleurs citer:

-GE-A-1 520 980 qui décrit des compositions pour le traitement des pommes de terre qui comprennent des surfactifs. Ces compositions sont toutefois constituées par ces émulsions et sont utilisées par aspersion ou par trempage.

-US-A-3 526 519 qui décrit des émulsions aqueuses de diphénylamine qui contiennent 0,02 à 0,5 % de diphénylamine. Ces émulsions sont appliquées par dispersion ou par trempage.

-US-A-4 226 179 qui décrit une solution de chlorophénylcarbamate d'isopropyle dans un solvant organique (huile d'arachide). Cette solution est appliquée par atomisation à chaud.

La présente invention vise à fournir des compositions qui puissent être appliquées à l'aide d'appareils de thermonébulisation, qui ne laissent pas de residus dangereux dans l'eneinte où est effectuée la thermonébulisation et qui permettent l'obtention d'un enrobage régulier de tous les fruits et légumes dans les caisses stockées, quelle que soit leur position dans la chambre de stockage.

La présente invention a, à cet effet, pour objet une composition destinée au traitement des fruits et des légumes par thermonébulisation, caractérisée en ce qu'elle compend sous forme de solution de 2 à 20 % en poids d'au moins une substance active choisie parmi les antioxydants, les antigerminatifs et les fongicides, de 10 à 20 % en poids d'eau, de 25 à 50 % en poids d'un glycol, et de 5 à 50 % en poids d'un mélange d'au moins deux émulsifiants ayant chacun une valeur HLB de 3 à 20, ce mélange ayant une valeur moyenne de HLB de 10 à 15.

Par valeur HLB de l'émulsifiant, on désigne ici la valeur de l'équilibre hydrophile lipophile. Dans le cas d'émulsifiant non-ionique, cette valeur est égale à de masse partie hydrophiles. Cette valeur est extrapolable par similitude aux produits anioniques.

Dans une forme préférée de réalisation de l'invention, la composition selon la présente invention comprend de 10 à 15 % de poids de substance active.

Le glycol est avantageusement le propylène glycol, bien que d'autres glycols tels que l'éthylène glycol puissent être utilisés.

Comme mélange d'émulsifiants, la composition préférée comprend avantageusement:

de 8 à 12 % en poids d'un acide gras tel que l'acide oléique,

de 14 à 18 % en poids d'un sel d'un acide gras tel que le sel de potassium de l'acide oléique et, éventuellement,

jusqu'à 30 % en poids d'un mélange d'émulsifiants ayant une valeur HLB moyenne de 8 à 15.

Le mélange d'acide gras et de sel d'acide gras peut être obtenu de manière simple par mélange d'acide gras et d'une base forte. Ce mélange agit comme un mélange de deux émulsifiants l'un à HLB d'environ 3 et l'autre à HLB d'environ 20.

Les compositions selon l'invention présentent l'avantage d'avoir une teneur en eau réduite qui permet d'éviter à la fois un trop fort refroidissement des gaz dans l'appareil de thermonébulisation et une surchauffe des substances actives introduites dans l'appareil de thermonébulisation.

Les substances actives de protection et/ou de conservation des fruits et légumes qui sont présentes dans les compositions selon l'invention peuvent être:

- des antioxydants tels que l'éthoxyquine, la diphénylamine, le butylhydroxyanisole,

- des antigerminatifs, tels que le chlorophényl isopropyl carbamate,
- des fongicides tels que le thiabendazole, l'iprodione, la sec.butylamine.

Il est à noter que les compositions selon l'invention sont des solutions vraies. Ces solutions sont obtenues avec des substance qui sont liquides à température ambiante et pratiquement insolubles dans l'eau et évidemment avec les substances hydrosolubles, ainsi qu'avec certaines substances solides pratiquement insolubles dans l'eau. Ce dernier fait est particulièrement surprenant. C'est ainsi que l'on obtient des solutions vraies, notamment avec l'éthoxyquine, le butylhydroxyanisole, le diphényl amine et le chlorophénylisopropyl carbamate et des dispersions avec des substances telles que l'iprodione et le thiabendazole.

Le pH des compositions aqueuses selon l'invention peut être réglé à une valeur de 6 à 8 de façon à ne pas nuire aux fruits et légumes traités.

Les exemples suivante illustrent la présente invention. Dans ces exemples, les parties et pourcentages sont en poids, sauf indications contraires.

## EXEMPLE 1

On prépare une solution en mélangeant les constituants suivants:

| | |
|---|---|
| Ethoxyquine | 15 % |
| Acide oléique | 25 % |
| Potasse caustique | 3 % |
| Propylène glycol | 40 % |
| Eau | 17 % |

On pulvérise cette solution dans une chambre de stockage contenant des caisses de pommes empilées sous forme d'un fin brouillard à l'aide d'un appareil de thermonébulisation Dyna Fog DH 120 de la Société Curtis Dyna Products Corp. On obtient une température de 120°C et un brouillard très fin.

On obtient avec cette un enrobage particulièrement satisfaisant.

## EXEMPLE 2

On prépare une solution en mélangenant les constituants suivants:

| | |
|---|---|
| Diphénylamine | 10 % |
| Acide oléique | 25 % |
| Potasse caustique | 3 % |
| Propylène glycol | 30 % |
| Acide oléique éthoxylé (10 moles) | 5 % |
| Acide oléique éthoxyle ( 6 moles) | 15 % |
| Eau | 12 % |

On pulvérise cette solution en opérant comme à l'exemple 1 et on obtient un enrobage particulièrement satisfaisant.

## EXEMPLE 3

On prépare une solution en mélangeant les constituants suivants:

| | |
|---|---|
| sec. Butylamine | 10 % |
| Acide sulfurique | 5 % |
| Acide oléique | 25 % |
| Propylène glycol | 40 % |
| Eau | 20 % |

(la sec. butylamine sert, d'une part, de substance active sous forme de sulfate et, d'autre part, à neutraliser une partie de l'acide oléique).

On plvérise cette solution en opérant comme à l'exemple 1 on obtient un enrobage satisfaisant.

Les avantages obtenus grâce à la présente invention sont les suivants:

1) Les fruits et légumes ne subissent aucun dommage mécanique, alors que c'est le cas avec les machines traditionnellement utilisées pour l'application de substances fongicides.

2) Après la récolte, les fruits ne sont plus manipulés, sauf lorsqu'ils sont envoyés sur les marchés.

3) Il n'est plus nécessaire de faire l'achat de matériel coûteux pour l'application de produits de traitement.

4) Le temps d'application de tels produits est très rapide. En effet, on peut traiter 1.000 tonnes de fruits ou légumes en 20 heures au maximum. Il est possible en outre de traiter en même temps plusieurs chambres à l'aide de plusièurs appareils.

5) Il est possible de traiter avec de faibles doses, éventuellement en répétant les traitements, dans le cas d'une longue conservation.

6) On élimine le maintien des fruits et légumes à la température ambiante, parce qu'ils sont tout de suite stockés en chambre froide en attente d'être traités.

7) On élimine le phénomène d'intercontamination par accumulation dans l'eau de traitement d'agents de contamination que les produits utilisés ne permettent pas d'éliminer.

8) On obtient un dosage précis des produits de traitement quand on connaît le volume exact des chambres, indépendamment de l'intervalle entre la préparation du mélange et le traitement, de la plus ou moins importante présence d'eau sur les fruits et la différente valeur d'absorption de différents produits par la peau des fruits traités. Ainsi, il n'y a pas le phénomène d'appauvrissement de la solution comme cela arrive dans les méthodes traditionnelles, par exemple par immersion.

9) On obtient un enrobage plus régulier des fruits et légumes qu'en utilisant les techniques classiques par immersion ou aspersion pour

lesquelles les concentrations superficielles en produits de traitement varient par suite de phénomènes de sédimentation (immersion) , de mouillage insuffisant (aspersion), de dilution, si les fruits sont mouillés, ou d'absorption progressive par les fruits et légumes traités. Cette homogénéité de l'enrobage permet d'utiliser des doses plus faibles de substances actives et donc de diminuer les doses résiduelles de ces substances actives.

10) La durée de vie des caisses en bois est augmentée, car les caisses ne sont pas exposées à l'action nuisible de l'eau avec une croissance souvent incontrôlée de champignons saprophytes. On obtient ainsi une appréciable économie.

11) Le rendement calculé par rapport à la substance active est fortement amélioré. En effet, alors qu'en utilisant l'immersion, le rendement n'est que de l'ordre de 3 %, avec la présente invention le rendement peut atteindre 40 %.

## Revendications

1. Composition destinée au traitement des fruits et des légumes par thermonébulisation, caractérisée en ce quelle comprend sous forme de solution de 2 à 20 % en poids d'au moins une substance active choisie parmi les antioxydants, les antigerminatifs et les fongicides, de 10 à 20 % en poids d'eau, de 25 à 50 % en poids d'un glycol, et de 5 à 50 % en poids d'un mélange d'au moins deux émulsifiants ayant chacun une valeur HLB de 3 à 20, ce mélange ayant une valeur moyenne de HLB de 10 à 15.

2. Composition selon la revendication 1, caractérisée en ce que la substance active est choisie parmi l'éthoxyquine, la diphénylamine, le butylhydroxyanisole, le chlorophényl carbamate d'isopropyle, et la sec. butylamine.

3. Composition selon la revendication 1 ou la revendication 2, caractérisée en ce que le glycol est le propylène glycol.

4. Composition selon l'une quelconque des revendications 1 à 3, caractérisée en ce que la composition comprend comme mélange d'émulsifiants: de 8 à 12 % en poids d'acide gras, de 14 à 18 % en poids d'un sel d'acide gras, et éventuellement jusquà 30 % en poids d'un mélange d'émulsifiants ayant une valeur HLB moyenne de 8 à 15.

5. Composition selon la revendication 4, caractérisée en ce que le mélange d'acide gras est obtenu par mélange d'acide gras et d'un base forte.

6. Composition selon la revendication 5, caractérisée en ce que l'acide gras est l'acide oléique.

7. Composition selon l'une quelconque des revendications précédentes, caractérisée en ce que la substance active est la diphénylamine.

8. Procédé de traitement de fruits et légumes, caractérisé en ce que l'on applique dans une enceinte fermée contenant des fruits et des légumes, par thermonébulisation, une composition selon l'une quelconque des revendications précédentes.

## Patentansprüche

1. Zusammensetzung zur Behandlung von Obst und Gemüse durch Thermovernebelung, dadurch gekennzeichnet, daß sie in Form einer Lösung 2 bis 20 Gewichtsprozent mindestens eines Wirkstoffs, der ein Oxydationsinhibitor, ein keimhemmender Stoff und/oder ein Fungizid sein kann, 10 bis 20 Gewichtsprozent Wasser, 25 bis 50 Gewichtsprozent eines Glykols und 5 bis 50 Gewichtsprozent eines Gemisches enthält, das aus mindestens zwei Emulgatoren mit jeweils einem HLB-Wert von 3 bis 20 besteht und einen mittleren HLB-Wert von 10 bis 15 hat.

2. Zusammensetzung nach Anspruch 1, dadurch gekennzeicnet, daß der Wirkstoff Äthoxyquin, Diphenylamin, Butylhydroxyanisol, Isopropyl-chlorphenyl-carbamat und/oder sek. Butylamin sein kann.

3. Zusammensetzung nach Anspruch 1 oder 2, dadurch gekennzeichnet, daß das Glykol Propylenglykol ist.

4. Zusammensetzung nach einem der vorhergehenden Ansprüche, dadurch gekennzeichnet, daß sie als Emulgatorengemisch 8 bis 12 Gewichtsprozent Fettsäure, 14 bis 18 Gewichtsprozent eines Fettsäuresalzes und ggf. bis zu 30 Gewichtsprozent eines Emulgatorengemisches mit einem mittleren HLB-Wert von 8 bis 15 enthält.

5. Zusammensetzung nach Anspruch 4, dadurch gekennzeichnet, daß das Fettsäuregemisch durch Mischung von Fettsäure und einer starken Base gebildet ist.

6. Zusammensetzung nach Anspruch 5, dadurch gekennzeichnet, daß die Fettsäure Ölsäure ist.

7. Zusammensetzung nach einem der vorhergehenden Ansprüche, dadurch gekennzeichnet, daß der Wirkstoff Diphenylamin ist.

8. Verfahren zur Behandlung von Obst und Gemüse, dadurch gekennzeichnet, daß in einem geschlossenen, Obst und Gemüse enthaltenden Raum durch Thermovernebelung eine Zusammensetzung nach einem der vorhergehenden Ansprüche aufgebracht wird.

## Claims

1. A composition for the thermal mist spraying treatment of fruits and vegetables, characterized in that it comprises in the form of a solution 2 to 20 % by weight of an active substance selected from among the antioxidants, antigerminants and fungicides, 10 to 20 % by weight of water, 25 to 50 % by weight of a glycol, and 5 to 50 % by weight of a mixture of at least two emulsifying agents each having a mean HLB value of 3 to 20, the mixture having a mean HLB value of 10 to 15.

2. A composition according to claim 1, characterized in that the active substance is selected from among ethoxyquin, diphenyl amine, butyl hydroxy anisole, chlorophenyl isopropyl carbamate and sec. butyl amine.

3. A composition according to claims 1 or 2, characterized in that the glycol is propylene glycol.

4. A composition according to one of claims 1 to 3, characterized in that the composition comprises as the mixture of emulsifying agents: from 8 to 12 % by weight of fatty acid, from 14 to 18 % by weight of a fatty acid salt, and if necessary up to 30 % by weight of a mixture of emulsifying agents having a mean HLB value of 8 to 15.

5. A composition according to claim 4, characterized in that the mixture of fatty acid is obtained by mixing fatty acid and a strong base.

6. A composition according to claim 5, characterized in that the fatty acid is oleic acid.

7. A composition according to any of the preceding claims, characterized in that the active substance is diphenyl amine.

8. A process of treatment for fruits and vegetables, characterized in that a composition according to any of the preceding claims is applied by mist spraying in an enclosed space containing fruits and vegetables.